# EUROPEAN PATENT APPLICATION

(11) **EP 4 836 540 A1**
(43) Date of publication of application: **04.11.2026**
(21) Application number: 25744430.7
(22) Date of filing: 06.01.2025
(51) Int. Cl.: H04W 52/02, H04W 72/04

(54) **COMMUNICATION METHOD AND APPARATUS**

(30) Priority: 24.01.2024 CN 202410102133
(71) Applicant: Huawei Technologies Co., Ltd., Shenzhen, Guangdong 518129 (CN)
(72) Inventor: PENG, Wenjie, Shenzhen, Guangdong 518129 (CN)
(74) Representative: Huawei European IPR
(86) International application number: PCT/CN2025/070769
(87) International publication number: WO 2025/156985

(57) **Abstract**

This application relates to a communication method and apparatus. In the method, a terminal device may receive, from a first network device, first information indicating a first resource. The first resource may be for communication between the terminal device and a second network device. In other words, when a first communication connection exists between the terminal device and the first network device, and a second communication connection exists between the terminal device and the second network device, the terminal device may obtain, by monitoring signals from the first network device, the first resource for communication between the terminal device and the second network device. As a result, the terminal device does not need to monitor signals from the second network device. In this way, the power consumption of the terminal device is reduced, thereby achieving energy saving of the terminal device.

## Description

This application claims priority to Chinese Patent Application No. 202410102133.3, filed with the China National Intellectual Property Administration on January 24, 2024, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To improve data transmission rate and reliability, a terminal device may simultaneously connect to a plurality of base stations. These base stations include one primary base station and a plurality of secondary base stations. For example, in a dual connectivity (dual connectivity, DC) scenario, the terminal device may connect to one primary base station and one secondary base station. The primary base station may be a new radio (new radio, NR) base station, and the secondary base station may be a long term evolution (long term evolution, LTE) base station. In this case, the terminal device may be scheduled by both the primary base station and the secondary base station, resulting in high power consumption. Therefore, how to reduce power consumption of the terminal device becomes an urgent technical problem to be addressed currently.

### SUMMARY

This application provides a communication method and apparatus to reduce power consumption of terminal devices, thereby achieving energy saving of the terminal device.

According to a first aspect, a communication method is provided. The method may be performed by a terminal device, or may be performed by a module (for example, a processor, a chip, or a chip system) used in the terminal device, or may be implemented by a logical node, a logical module, or software that can implement all or a part of functions of the terminal device. In the communication method, first information may be received from a first network device, where the first information indicates a first resource, and the first resource is for communication between the terminal device and a second network device. A first communication connection exists between the terminal device and the first network device, and a second communication connection exists between the terminal device and the second network device.

It can be learned that, in the foregoing embodiment, when the first communication connection exists between the terminal device and the first network device, and a second communication connection exists between the terminal device and the second network device, the terminal device may receive, from the first network device, the first information indicating the first resource. The first resource may be for communication between the terminal device and the second network device. In other words, the terminal device may obtain, by monitoring signals from the first network device, the first resource for communication between the terminal device and the second network device. As a result, the terminal device does not need to monitor signals from the second network device. In this way, the power consumption of the terminal device is reduced, thereby achieving energy saving of the terminal device.

In a possible implementation, the method further includes: receiving second information from the first network device, where the second information indicates the terminal device to receive, from the first network device, information indicating a resource for communication between the terminal device and the second network device.

It can be learned that, in the foregoing embodiment, the terminal device can learn that the information indicating the resource for communication between the terminal device and the second network device can be obtained by monitoring signals from the first network device, thereby ensuring smooth execution of the solution.

In a possible implementation, the receiving the first information from the first network device includes: receiving the first information from the first network device on a second resource. The second resource is for transmitting the information indicating the resource for communication between the terminal device and the second network device.

It can be learned that, in the foregoing embodiment, the terminal device may receive the first information on a resource (for example, the second resource) for transmitting the information indicating the resource for communication between the terminal device and the second network device, thereby ensuring reliable transmission of the first information.

In a possible implementation, the method further includes: receiving third information from the first network device, where the third information indicates the second resource. Optionally, the third information may be configuration information of the first network device, may be included in the configuration information of the first network device, may be configuration information of the second network device, or may be included in the configuration information of the second network device.

In a possible implementation, the second resource is a downlink resource dedicated to transmitting the information indicating the resource for communication between the terminal device and the second network device; or the second resource is a downlink resource for transmitting information indicating a resource for communication between the terminal device and the first network device.

It can be learned that, in the foregoing embodiment, the terminal device may receive the first information on a dedicated resource, thereby ensuring that transmission of the first information is not interfered by another factor. Alternatively, when the second resource is the downlink resource for transmitting the information indicating the resource for communication between the terminal device and the first network device, it is equivalent to a case in which the second resource is a part of the resource for communication between the terminal device and the first network device, to provide higher flexibility.

In a possible implementation, the third information further includes information indicating a timing advance of the second network device. For example, the configuration information of the first network device includes the information indicating the timing advance of the second network device. In this way, the terminal device can learn of information about the timing advance of the second network device by monitoring signals from the first network device, so that power consumption of the terminal device is reduced, and energy saving of the terminal device is achieved.

In a possible implementation, that the first information indicates the first resource includes: The first information indicates the first resource and indicates that the first resource is for communication between the terminal device and the second network device.

It can be learned that, in the foregoing embodiment, the first information may explicitly indicate the first resource and explicitly indicate that the first resource is for communication between the terminal device and the second network device, to help the terminal device correctly understand the first information, and avoid an information loss caused by inconsistent understanding, thereby reducing a risk of unreliable communication.

In a possible implementation, the first information further includes information indicating a third resource, the third resource is used by the terminal device to send feedback information to the second network device, and the feedback information is for feeding back a reception status of data corresponding to the first resource.

In a possible implementation, the method further includes: receiving fourth information from the first network device, where the fourth information indicates the terminal device to stop receiving, from the first network device, the information indicating the resource for communication between the terminal device and the second network device.

According to a second aspect, a communication method is provided. The method may be performed by a first network device, or may be performed by a module (for example, a processor, a chip, or a chip system) used in the first network device, or may be implemented by a logical node, a logical module, or software that can implement all or a part of functions of the first network device. In the communication method, information indicating a first resource may be received from a second network device, where the first resource is for communication between a terminal device and the second network device. Therefore, first information may be sent to the terminal device, where the first information indicates the first resource. A first communication connection exists between the terminal device and the first network device.

It can be learned that, in the foregoing embodiment, when the first communication connection exists between the terminal device and the first network device, the second network device may send, to the first network device, the information indicating the first resource, so that the first network device can send the first information indicating the first resource. The first resource may be for communication between the terminal device and the second network device. In other words, the terminal device may obtain, by monitoring signals from the first network device, the first resource for communication between the terminal device and the second network device. As a result, the terminal device does not need to monitor signals from the second network device. In this way, the power consumption of the terminal device is reduced, thereby achieving energy saving of the terminal device.

In a possible implementation, the method further includes: sending second information to the terminal device, where the second information indicates the terminal device to receive, from the first network device, information indicating a resource for communication between the terminal device and the second network device.

It can be learned that, in the foregoing embodiment, the first network device sends the second information to the terminal device, so that the terminal device can learn that the information indicating the resource for communication between the terminal device and the second network device can be obtained by monitoring signals from the first network device, thereby ensuring smooth execution of the solution.

In a possible implementation, the sending the first information to the terminal device includes: sending the first information to the terminal device on a second resource. The second resource is for transmitting the information indicating the resource for communication between the terminal device and the second network device.

It can be learned that, in the foregoing embodiment, the first network device sends the first information on a resource (for example, the second resource) for transmitting the information indicating the resource for communication between the terminal device and the second network device, thereby ensuring reliable transmission of the first information.

In a possible implementation, the method further includes: sending third information to the terminal device, where the third information indicates the second resource.

In a possible implementation, the second resource is a downlink resource dedicated to transmitting the information indicating the resource for communication between the terminal device and the second network device; or the second resource is a downlink resource for transmitting information indicating a resource for communication between the terminal device and the first network device.

It can be learned that, in the foregoing embodiment, the first network device may receive the first information on a dedicated resource, thereby ensuring that transmission of the first information is not interfered by another factor. Alternatively, when the second resource is the downlink resource for transmitting the information indicating the resource for communication between the terminal device and the first network device, it is equivalent to a case in which the second resource is a part of the resource for communication between the terminal device and the first network device, to provide higher flexibility.

In a possible implementation, the method further includes: receiving, from the second network device, information indicating a timing advance of the second network device. The third information further includes the information indicating the timing advance of the second network device.

It can be learned that, in the foregoing embodiment, the first network device may send the information indicating the timing advance of the second network device, so that the terminal device can learn of information about the timing advance of the second network device by monitoring signals from the first network device. In this way, the power consumption of the terminal device is reduced, thereby achieving energy saving of the terminal device.

In a possible implementation, that the first information indicates the first resource includes: The first information indicates the first resource and indicates that the first resource is for communication between the terminal device and the second network device.

It can be learned that, in the foregoing embodiment, the first information may explicitly indicate the first resource and explicitly indicate that the first resource is for communication between the terminal device and the second network device, to help the terminal device correctly understand the first information, and avoid an information loss caused by inconsistent understanding, thereby reducing a risk of unreliable communication.

In a possible implementation, the first information further includes information indicating a third resource, the third resource is used by the terminal device to send feedback information to the second network device, and the feedback information is for feeding back a reception status of data corresponding to the first resource.

In a possible implementation, the method further includes: determining a first time instant, where the first time instant is a time instant at which the first network device sends the first information to the terminal device; and the sending the first information to the terminal device includes: sending the first information to the terminal device based on the first time instant.

It can be learned that, in the foregoing embodiment, the first network device may send the first information to the terminal device based on the first time instant, so that the terminal device can receive the first information at a corresponding time point, thereby avoiding a problem that the first resource is unavailable because the terminal device receives the first information too late.

In a possible implementation, the method further includes: sending fourth information to the terminal device, where the fourth information indicates the terminal device to stop receiving, from the first network device, the information indicating the resource for communication between the terminal device and the second network device.

In a possible implementation, the method further includes: receiving first indication information from the terminal device or the second network device, where the first indication information indicates to send, to the terminal device via the first network device, the information indicating the resource for communication between the terminal device and the second network device.

In a possible implementation, the method further includes: sending second indication information to the second network device, where the second indication information indicates that the first network device supports sending, to the terminal device, the information indicating the resource for communication between the terminal device and the second network device.

It can be learned that, in the foregoing embodiment, the second network device can learn of a capability of the first network device, for example, supporting sending, to the terminal device, the information indicating the resource for communication between the terminal device and the second network device, thereby ensuring smooth execution of the solution.

In a possible implementation, the method further includes: sending third indication information to the terminal device or the second network device, where the third indication information indicates that sending, to the terminal device via the first network device, the information indicating the resource for communication between the terminal device and the second network device is allowed.

It can be learned that, in the foregoing embodiment, the terminal device or the second network device can learn that the first network device agrees to send, to the terminal device via the first network device, the information indicating the resource for communication between the terminal device and the second network device, thereby ensuring smooth execution of the solution.

In a possible implementation, the method further includes: receiving, from the second network device, information indicating a fourth resource. The fourth resource is for transmitting the information indicating the resource for communication between the terminal device and the second network device. The fourth resource includes the second resource.

In a possible implementation, the method further includes: sending, to the second network device, information indicating a fifth resource, where the fifth resource is for determining the fourth resource. The fifth resource is for transmitting the information indicating the resource for communication between the terminal device and the second network device.

In a possible implementation, the method further includes: receiving the second information from the second network device, where the second information indicates the terminal device to receive, from the first network device, the information indicating the resource for communication between the terminal device and the second network device.

According to a third aspect, a communication method is provided. The method may be performed by a second network device, or may be performed by a module (for example, a processor, a chip, or a chip system) used in the second network device, or may be implemented by a logical node, a logical module, or software that can implement all or a part of functions of the second network device. In the communication method, information indicating a first resource may be sent to a first network device, where the first resource is for communication between a terminal device and the second network device. A second communication connection exists between the terminal device and the second network device.

It can be learned that, in the foregoing embodiment, when the second communication connection exists between the terminal device and the second network device, the second network device may send, to the first network device, the information indicating the first resource, so that the first network device can send the first information indicating the first resource. The first resource may be for communication between the terminal device and the second network device. In other words, the terminal device may obtain, by monitoring signals from the first network device, the first resource for communication between the terminal device and the second network device. As a result, the terminal device does not need to monitor signals from the second network device. In this way, the power consumption of the terminal device is reduced, thereby achieving energy saving of the terminal device.

In a possible implementation, the method further includes: sending, to the first network device, information indicating a third resource, where the third resource is used by the terminal device to send feedback information to the second network device, and the feedback information is for feeding back a reception status of data corresponding to the first resource.

In a possible implementation, the method further includes: sending first indication information to the first network device, where the first indication information indicates to send, to the terminal device via the first network device, information indicating a resource for communication between the terminal device and the second network device.

In a possible implementation, the method further includes: receiving second indication information from the first network device, where the second indication information indicates that the first network device supports sending, to the terminal device, the information indicating the resource for communication between the terminal device and the second network device.

It can be learned that, in the foregoing embodiment, the second network device can learn of a capability of the first network device, for example, supporting sending, to the terminal device, the information indicating the resource for communication between the terminal device and the second network device, thereby ensuring smooth execution of the solution.

In a possible implementation, the method further includes: receiving third indication information from the first network device, where the third indication information indicates that sending, to the terminal device via the first network device, the information indicating the resource for communication between the terminal device and the second network device is allowed.

It can be learned that, in the foregoing embodiment, the second network device can learn that the first network device agrees to send, to the terminal device via the first network device, the information indicating the resource for communication between the terminal device and the second network device, thereby ensuring smooth execution of the solution.

In a possible implementation, the method further includes: sending, to the first network device, information indicating a fourth resource. The fourth resource is for transmitting the information indicating the resource for communication between the terminal device and the second network device. The fourth resource includes the second resource.

In a possible implementation, the method further includes: receiving, from the first network device, information indicating a fifth resource, where the fifth resource is for determining the fourth resource. The fifth resource is for transmitting the information indicating the resource for communication between the terminal device and the second network device.

In a possible implementation, the method further includes: sending second information to the first network device, where the second information indicates the terminal device to receive, from the first network device, the information indicating the resource for communication between the terminal device and the second network device.

According to a fourth aspect, a communication apparatus is provided. The communication apparatus includes a unit or a module configured to implement the method according to any implementation of any one of the first aspect to the third aspect. The communication apparatus may be a terminal device or a network device, or may be a module (for example, a processor, a chip, or a chip system) of the terminal device or the network device (for example, a first network device or a second network device), or may be a logical node, a logical module, or software that can implement all or a part of functions of the terminal device or the network device (for example, the first network device or the second network device).

According to a fifth aspect, a communication apparatus is provided. The communication apparatus includes at least one processor, and the at least one processor is configured to perform the method according to any implementation of any one of the first aspect to the third aspect. The communication apparatus may be a terminal device or a network device (for example, a first network device or a second network device), or may be a module (for example, a processor, a chip, or a chip system) of the terminal device or the network device (for example, the first network device or the second network device), or may be a logical node, a logical module, or software that can implement all or a part of functions of the terminal device or the network device (for example, the first network device or the second network device). The at least one processor may execute a computer program or instructions in a memory, so that the foregoing method is performed. The memory may be included in the communication apparatus, or may be located outside the communication apparatus. In addition, the communication apparatus may further include an interface.

According to a sixth aspect, a communication system is provided. The communication system includes a terminal device, a first network device, and a second network device. The terminal device is configured to perform the method according to any implementation of the first aspect. The first network device is configured to perform the method according to any implementation of the second aspect. The second network device is configured to perform the method according to any implementation of the third aspect.

According to a seventh aspect, a computer-readable storage medium is provided. The computer-readable storage medium stores computer instructions, and when the computer instructions are executed, a computer is caused to perform the method according to any implementation of any one of the first aspect to the third aspect.

According to an eighth aspect, a computer program product is provided. The computer program product includes computer program code, and when the computer program code is run on a computer, the computer is caused to perform the method according to any implementation of any one of the first aspect to the third aspect.

According to a ninth aspect, a chip is provided. The chip includes at least one processor and an interface, the processor is configured to read and execute instructions stored in a memory, and when the instructions are run, the chip is caused to perform the method according to any implementation of any one of the first aspect to the third aspect.

### BRIEF DESCRIPTION OF DRAWINGS

FIG. 1 shows a basic architecture of a communication system according to an embodiment of this application;
FIG. 2 shows an SFN of a cell of a primary network device and an SFN of a cell of a secondary network device;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The terms "system" and "network" may be used interchangeably in embodiments of this application. Unless otherwise specified, "/" represents an "or" relationship between associated objects. For example, A/B may represent A or B. "And/or" in this application is merely an association relationship for describing associated objects, and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

"Sending" and "receiving" in this application indicate a signal transmission direction. For example, "sending information to XX" may be understood as that a destination end of the information is the XX, and may include direct sending through an air interface, or include indirect sending by another unit or module through an air interface. "Receiving information from YY" may be understood as that a source end of the information is the YY, and may include directly receiving the information from the YY through an air interface, or may include indirectly receiving the information from the YY from another unit or module through an air interface. "Sending" may also be understood as "outputting" of a chip interface, and "receiving" may also be understood as "inputting" of the chip interface. In other words, sending and receiving may be performed between devices, for example, between a network device and a terminal device, or may be performed in a device, for example, sending or receiving is performed between components, modules, chips, software modules, or hardware modules in a device through a bus, a cable, or an interface. It may be understood that necessary processing, such as encoding and modulation, may be performed on information between a source end at which the information is sent and a destination end, and the destination end may understand valid information from the source end. A similar description in this application may be understood similarly, and details are not described again.

In this application, an "indication" may include a direct indication and an indirect indication, or may include an explicit indication and an implicit indication. Information indicated by a piece of information (for example, indication information in the following descriptions) is referred to as to-be-indicated information. In a specific implementation process, the to-be-indicated information may be indicated in a plurality of manners. For example, but not limited to, the to-be-indicated information such as the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be used for determining to-be-indicated information.

In the following specific implementations, the objectives, technical solutions, and beneficial effects of this application are further described in detail. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It should be understood that the technical solutions in embodiments of this application may be applied to a long term evolution (long term evolution, LTE) architecture, a 5th generation mobile communication technology (5th generation mobile network, 5G), a wireless local area network (wireless local area network, WLAN) system, a vehicle to everything (vehicle to everything, V2X) communication system, LTE-vehicle (LTE-vehicle, LTE-V), vehicle to vehicle (vehicle to vehicle, V2V), internet of vehicles, machine type communication (machine type communication, MTC), and the like. The technical solutions in embodiments of this application may be further applied to another future communication system, for example, a 6G communication system. In the future communication system, a same function may be maintained, but a name may be changed.

The following describes a basic architecture of a communication system provided in an embodiment of this application. The communication system provided in this application may include one or more network devices and one or more terminal devices.

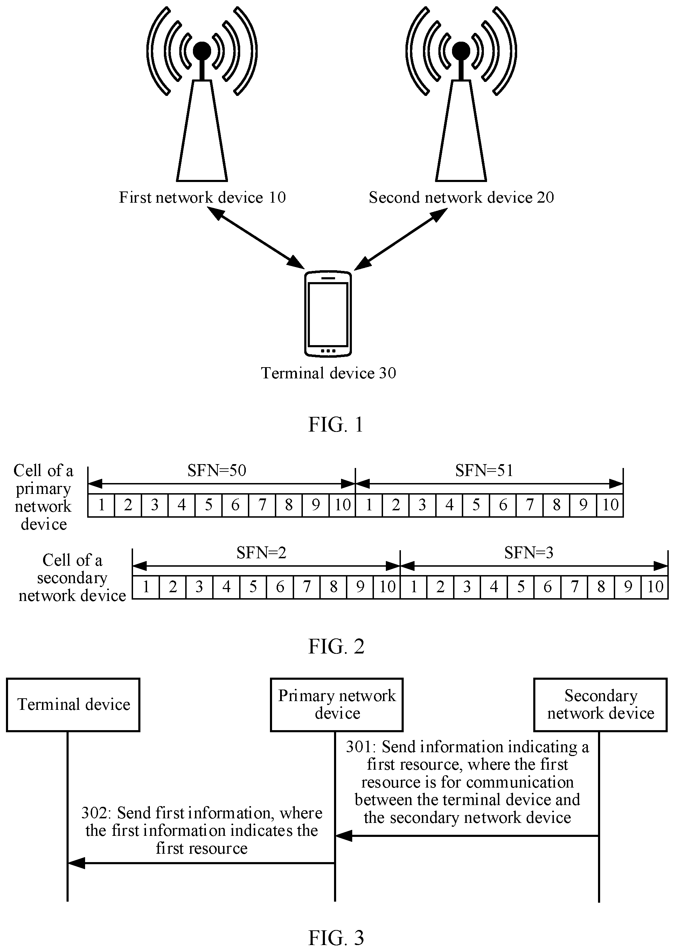

The following uses a system architecture shown in FIG. 1 as an example for description. As shown in FIG. 1, a communication system includes a first network device 10, a second network device 20, and a terminal device 30. The first network device 10 may communicate with the second network device 20, the first network device 10 may communicate with the terminal device 30, and the second network device 20 may communicate with the terminal device 30. A communication manner between devices is not limited in this application. For example, the first network device 10 may communicate with the second network device 20 through an interface between the first network device 10 and the second network device 20. For example, the first network device 10 may communicate with the terminal device 30 through an interface between the first network device 10 and the terminal device 30, and the second network device 20 may communicate with the terminal device 30 through an interface between the second network device 20 and the terminal device 30. An interface between network devices may be referred to as an XN interface. An interface between the network device and the terminal device may be referred to as an air interface. An interface name is not limited in this application.

In a DC technology, the first network device 10 may be referred to as, for example, a master node (master node, MN) or a primary network device, and the second network device 20 may be referred to as, for example, a secondary node (secondary node, SN) or a secondary network device. Names of the first network device 10 and the second network device 20 are not limited in this application. The following uses an example in which a first network device and a second network device are respectively a primary network device and a secondary network device for description, and this should not be considered as a limitation on this application.

In a possible implementation, DC may include evolved universal terrestrial radio access and new radio dual connectivity (E-UTRA-NR dual connectivity, EN-DC), next generation radio access network evolved universal terrestrial radio access and new radio dual connectivity (NG-RAN E-UTRA-NR dual connectivity, NGEN-DC), new radio and evolved universal terrestrial radio access dual connectivity (NR-E-UTRA dual connectivity, NE-DC), new radio and new radio dual connectivity (NR-NR dual connectivity, NR-DC), or the like. In EN-DC, that is, LTE-NR DC, the primary network device is an LTE base station connected to a 4G core network, and the secondary network device is an NR base station. In NGEN-DC, the primary network device is an LTE base station connected to a 5G core network, and the secondary network device is an NR base station. In NE-DC, that is, NR-LTE DC, the primary network device is an NR base station connected to the 5G core network, and the secondary network device is an LTE base station. In NR-DC, that is, NR-NR DC, both the primary network device and the secondary network device are NR base stations connected to the 5G core network. There are merely some possible examples, and standards of the primary network device and the secondary network device are not limited in this application. For example, at least one of the primary network device and the secondary network device may be a base station of another future communication system, for example, a 6G base station.

Optionally, the primary network device and the secondary network device may be deployed in a co-located (Co-located) manner or a non-co-located (Non Co-located) manner. A deployment manner of the primary network device and the secondary network device is not limited in this application.

In a possible implementation, one or more cells provided by the primary network device for a terminal device may form a master cell group, and one or more cells provided by the secondary network device for the terminal device may form a secondary cell group.

Optionally, the communication system may further include a core network device (not shown in FIG. 1). The primary network device and/or the secondary network device may further communicate with the core network device. The core network device may provide a communication service for the terminal device. The core network device is, for example, a device in the 5G core network (core network, CN). As a bearer network, a core network provides an interface to a data network, provides communication connection, authentication, management, and policy control for a terminal, bears a data service, and the like.

It should be noted that quantities of network devices and terminal devices in FIG. 1 are merely examples, and should not be considered as a specific limitation on this application. The following describes in detail the terminal device and the network device in the system architecture.

### 1. Terminal device

The terminal device is a user-side entity configured to receive a signal, or send a signal, or receive a signal and send a signal. The terminal device is configured to provide one or more of a voice service and a data connectivity service for a user. The terminal device may be a device that includes a wireless transceiver function and that can cooperate with a network device to provide a communication service for the user. Specifically, the terminal device may refer to user equipment (user equipment, UE), an access terminal, a subscriber unit, a subscriber station, a mobile station, a remote station, a remote terminal, a mobile device, a terminal, a wireless communication device, a user agent, a user apparatus, or a roadside unit (roadside unit, RSU). The terminal device may alternatively be an uncrewed aerial vehicle, an internet of things (internet of things, IoT) device, a station (station, ST) in a wireless local area network (wireless local area network, WLAN), a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC) terminal, a handheld device with a wireless communication function, a computing device or another processing device connected to a wireless modem, an in-vehicle device, a wearable device (also referred to as a wearable smart device), a virtual reality (virtual reality, VR) terminal, an augmented reality (augmented reality, AR) terminal, a wireless terminal in telemedicine (remote medical), a wireless terminal in industrial control (industrial control), a wireless terminal in self-driving (self-driving), a wireless terminal in a smart grid (smart grid), a wireless terminal in transportation safety (transportation safety), a wireless terminal in a smart city (smart city), a wireless terminal in a smart home (smart home), or the like. The terminal device may alternatively be a terminal in a 5G system, or a terminal in a next generation communication system. This is not limited in embodiments of this application.

A device form of the terminal device is not limited in embodiments of this application. An apparatus configured to implement a function of the terminal device may be a terminal device, or may be an apparatus, for example, a chip system, that can support the terminal device in implementing the function. The apparatus may be mounted in the terminal device or used in cooperation with the terminal device. In embodiments of this application, the chip system may include a chip, or may include a chip and another discrete component.

### 2. Network device

The network device is a network-side entity configured to send a signal, or receive a signal, or send a signal and receive a signal. The network device may be an apparatus deployed in a radio access network (radio access network, RAN) to provide a wireless communication function for a terminal device.

In a possible scenario, the network device may be a device having a base station function, for example, an evolved NodeB (evolved NodeB, eNodeB), a transmission reception point (transmission reception point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device in an NTN, in other words, may be deployed on a high-altitude platform or a satellite. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU) and a radio frequency unit (remote radio unit, RRU) in a distributed base station scenario, a transmission point (transmission reception point, TRP), a transmitting point (transmitting point, TP), a mobile switching center, or the like, or may be an antenna panel of a base station. The control node may be connected to a plurality of base stations, and configure resources for a plurality of terminals covered by a plurality of base stations. A device with a base station function may have different names in systems using different radio access technologies. For example, the device may be a gNB in 5G, a network side device in a network after 5G, a network device in a future evolved public land mobile (communication) network (public land mobile network, PLMN) network, or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

All or a part of functions of the network device in this application may alternatively be implemented through a software function running on hardware, or implemented through a virtualized function instantiated on a platform (for example, a cloud platform). The network device in this application may alternatively be a logical node, a logical module, or software that can implement all or a part of functions of the network device.

In another possible scenario, a plurality of network devices collaborate to assist a terminal device in implementing wireless access, and different network devices separately implement a part of functions of a base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be mounted in the network device or used in cooperation with the network device.

For ease of understanding content of the solutions, the following further explains and describes some terms in embodiments of this application, to facilitate understanding of a person skilled in the art. This part is merely for ease of understanding, and cannot be considered as a specific limitation on this application.

### 1. System frame number and frame timing difference (SFN and frame timing difference, SFTD)

Generally, different network devices such as a primary network device and a secondary network device may have same or different downlink timing, but absolute time points corresponding to start points of a same radio frame may be different. For example, when different network devices have same downlink timing, because distances between a terminal device and the different network devices are different, frame boundary offsets (frame boundary offsets) measured by the terminal device may be different, resulting in a difference in start points of radio frames of cells in the different network devices. In other words, because delays in information transmission between the terminal device and the different network devices are different, there may be a difference in start points of radio frames of cells in the different network devices received by the terminal device. To obtain the difference, SFTD measurement is introduced, to be specific, the terminal device measures a system frame number (system frame number, SFN) offset and a frame boundary timing offset between two cells. For example, an SFN offset (SFN offset) and a frame boundary offset are measured.

In a possible implementation, an SFTD may include an SFN offset and a frame boundary offset. For example, in FIG. 2, the SFTD may be determined based on a difference between a signal (for example, a signal whose SFN is 50) of a cell of the primary network device and a signal (for example, a signal whose SFN is 2) of a cell of the secondary network device.

In a possible implementation, the terminal device may further report the SFTD to the primary network device and/or the secondary network device.

### 2. Timing advance (timing advance, TA)

A TA may be for synchronization between a terminal device and a network device, for example, uplink time synchronization. In a possible implementation, the TA may be determined based on a round-trip delay between the terminal device and the network device.

In a possible implementation, TAs of different network devices may be the same or different. For example, a TA of a primary network device may be the same as or different from a TA of a secondary network device.

### 3. Downlink control information (downlink control information, DCI)

A communication system may support a plurality of different DCI formats. DCI may include a plurality of indication fields, and each indication field corresponds to a respective indication function. DCI corresponding to different DCI formats may include one or more different indication fields. In a possible implementation, some DCI may be for scheduling an uplink transmission resource, and some DCI may be for scheduling a downlink transmission resource. The following provides examples with reference to the two cases for description. Details are as follows.
1. The DCI may be for scheduling a physical uplink shared channel (physical uplink shared channel, PUSCH). For example, the DCI may indicate a PUSCH resource. For example, the DCI may include at least one of the following indication fields: a DCI format identifier, a time-frequency domain position (for example, at least one of a frequency domain resource indication, a time domain resource indication, a carrier indication, or an uplink (UL)/supplementary uplink (supplementary uplink, SUL) indication, and a bandwidth part (bandwidth, BWP) indication) of the PUSCH resource, a modulation and coding scheme of data carried on the PUSCH resource, a redundancy version, a hybrid automatic repeat request acknowledgment (hybrid automatic repeat request, HARQ) process number, a PUSCH transmit power command, precoding information, and a quantity of layers.
   For example, a secondary network device may receive a resource scheduling request (which may be a BSR or an SR) from a terminal device, to trigger the secondary network device to determine, based on a scheduling algorithm, a PUSCH resource to be scheduled for the terminal device. In this way, the PUSCH resource may be indicated by the DCI. The resource scheduling request may be, for example, a buffer status report (buffer status report, BSR) or a scheduling request (scheduling request, SR).
2. The DCI may be for scheduling a physical downlink shared channel (physical downlink shared channel, PDSCH). For example, the DCI may indicate a PDSCH resource, and may further indicate a physical uplink control channel (physical uplink control channel, PUCCH) resource. For example, the DCI may include at least one of the following indication fields: a DCI format identifier, a time-frequency domain position (for example, at least one of a frequency domain resource indication, a time domain resource indication, a carrier indication, and a BWP indication) of the PDSCH resource, a modulation and coding scheme of data carried on the PDSCH resource, an indication indicating whether the data is information data, a redundancy version, a HARQ process number, a PUCCH resource indication, a PDSCH transmit power command, and a PDSCH-to-HARQ_feedback timing indicator. The HARQ feedback information may include an acknowledgment (acknowledgement, ACK) or a negative acknowledgment (negative acknowledgement, NACK). For example, when a terminal device successfully decodes data on a PDSCH, the HARQ feedback information may include the ACK. When the terminal device fails to decode the data on the PDSCH, the HARQ feedback information may include the NACK.

For example, a secondary network device may receive downlink data from a core network device or a primary network device, to trigger the secondary network device to determine, based on a scheduling algorithm, a PDSCH resource to be scheduled for a terminal device. In this way, the PDSCH resource may be indicated by the DCI. Optionally, the secondary network device may further determine a PUCCH resource. For example, the PUCCH resource may be further indicated by the DCI.

In a possible implementation, formats of DCI used by different network devices may be the same or different. For example, a format of DCI used by the primary network device may be the same as or different from a format of DCI used by the secondary network device.

In a possible implementation, the DCI may be carried on a physical downlink control channel (physical downlink control channel, PDCCH).

It should be noted that, in this application, the PUSCH, the PDSCH, the PUCCH, and the PDCCH are merely examples of an uplink data channel, a downlink data channel, an uplink control channel, and a downlink control channel, respectively. In different systems and different scenarios, a data channel and a control channel may have different names. This is not limited in embodiments of this application.

Generally, in a DC technology, a terminal device is connected to both a primary network device and a secondary network device, and the terminal device needs to monitor (where monitoring in this application may be understood as receiving, detecting, or the like) both a PDCCH of the primary network device and a PDCCH of the secondary network device, resulting in high power consumption of the terminal device. Based on this, this application provides an embodiment shown in FIG. 3, to resolve the problem. It should be noted that, in this application, a DC scenario is used as an example for description, and a method provided in this application may be further applied to another scenario in which the technology exists.

The following describes embodiments of this application in detail. Specifically, a terminal in the following may be the terminal in FIG. 1, and a network device (for example, a primary network device or a secondary network device) in the following may be the network device in FIG. 1. It should be noted that names of messages between network elements, names of parameters in the messages, and the like in the following embodiments are merely examples, and there may be other names in a specific implementation. This is not specifically limited in embodiments of this application. Processing performed by a single execution entity (a terminal or a network device (for example, a primary network device or a secondary network device)) shown in embodiments of this application may alternatively be performed by a plurality of execution entities. These execution entities may be logically and/or physically separated. For example, processing performed by the network device (for example, the primary network device or the secondary network device) may be performed by at least one of a CU, a DU, and an RU.

FIG. 3 shows a communication method according to an embodiment of this application. The method includes but is not limited to the following steps. It should be noted that embodiments of this application are merely described by using an example in which all steps included in embodiments are performed, and should not be considered as a specific limitation on this application. In other words, a part or all of steps included in an embodiment of this application (that is, any one of embodiments in FIG. 3 to FIG. 6) may be performed when there is no logical conflict.

301: A secondary network device sends, to a primary network device, information indicating a first resource, where the first resource is for communication between a terminal device and the secondary network device.

Correspondingly, the primary network device receives, from the secondary network device, the information indicating the first resource.

In a possible implementation, that the first resource is for communication between the terminal device and the secondary network device includes: The first resource is for uplink communication and/or downlink communication between the terminal device and the secondary network device. In this application, uplink communication between the terminal device and the secondary network device may be understood as that the terminal device sends uplink data and/or uplink signaling to the secondary network device. Downlink communication between the terminal device and the secondary network device may be understood as that the secondary network device sends downlink data and/or downlink signaling to the terminal device.

For example, the uplink data may be carried on a PUSCH. In this case, the first resource may be referred to as a PUSCH resource. A name of the first resource is not limited in this application. Further, in a possible implementation, the information indicating the first resource may be, for example, included in a message, and the message may be DCI, an Xn message, or another message. When the information indicating the first resource is included in the DCI, it may also be described as that the information indicating the first resource is the DCI or at least one indication field in the DCI. A description manner thereof is not limited in this application.

For another example, the downlink data may be carried on a PDSCH. In this case, the first resource may be referred to as a PDSCH resource. A name of the first resource is not limited in this application. Optionally, the secondary network device may further send, to the primary network device, information indicating a third resource, where the third resource is used by the terminal device to send feedback information to the secondary network device. The feedback information is for feeding back a reception status of data corresponding to the first resource. For example, the feedback information is for feeding back a reception status of downlink data transmitted on the first resource. Optionally, the feedback information may be an ACK or a NACK. In a possible implementation, the feedback information may be carried on a PUCCH. In this case, the third resource may be referred to as a PUCCH resource or the like. A name of the third resource is not limited in this application.

In a possible implementation, the information indicating the first resource and the information indicating the third resource may be included in different messages, or different indication fields of different messages, or a same message, or a same indication field of a same message, or the like. The message herein may be, for example, DCI, an Xn message, or another message.

It should be noted that the resource mentioned in this application may be a time domain resource, a frequency domain resource, and/or the like.

The time domain resource may include, for example, at least one of the following: a frame, a subframe, a slot, and a symbol. In NR, a frame has a duration of 10 milliseconds (ms), each frame is divided into 10 subframes, and a length of each subframe is 1 ms. Each subframe is divided into several slots. When a cyclic prefix (cyclic prefix, CP) is a normal cyclic prefix (normal CP, NCP), each slot includes 14 symbols. When a cyclic prefix is an extended cyclic prefix (extended CP, ECP), each slot includes 12 symbols. Certainly, with evolution of communication technologies, a quantity of symbols included in one slot may alternatively be another value. This is not limited in this application. The symbol in this application may be an orthogonal frequency-division multiplexing (orthogonal frequency-division multiplexing, OFDM) symbol.

The frequency domain resource may include, for example, at least one of the following: a subcarrier, a resource block (resource block, RB), a resource block group (resource block group, RBG), a sub-channel (sub-channel), a bandwidth part (bandwidth part, BWP), and a carrier. One resource block is a plurality of contiguous subcarriers in frequency domain. For example, one resource block may include 12 subcarriers. A plurality of resource blocks may form one resource block group. The carrier is a contiguous frequency range that complies with a system specification. The frequency range may be determined based on a center frequency (denoted as a carrier frequency) of the carrier and a bandwidth of the carrier. One carrier may include one or more bandwidth parts. One bandwidth part may include one or more sub-channels, and one sub-channel includes a plurality of resource blocks. The sub-channel may also be referred to as a subband.

302: The primary network device sends first information to the terminal device, where the first information indicates the first resource.

Correspondingly, the terminal device receives the first information from the primary network device. A first communication connection exists between the terminal device and the primary network device, and a second communication connection exists between the terminal device and the secondary network device. It should be noted that a communication connection (for example, the first communication connection or the second communication connection) mentioned in this application may be a data connection and/or a radio resource control (radio resource control, RRC) connection. The data connection is for data transmission between the terminal device and a network device, including uplink data transmission and/or downlink data transmission. The RRC connection is for data and/or signaling transmission between the terminal device and a network device. For example, the terminal device may perform random access to the primary network device, so that the first communication connection exists between the terminal device and the primary network device. For example, the terminal device may perform random access to the secondary network device, so that the second communication connection exists between the terminal device and the secondary network device.

The following describes the first information in detail.

In a possible implementation, the first information may be, for example, DCI or at least one indication field in the DCI. Optionally, the information indicating the first resource may trigger the primary network device to send the first information. The following uses two cases as examples for description. Details are as follows.
1. The primary network device may parse the information indicating the first resource. For example, the primary network device may forward the information indicating the first resource, in other words, the first information and the information indicating the first resource are same information. Alternatively, the primary network device may generate the first information based on the information indicating the first resource.
   For ease of understanding, the following describes the two manners by using an example in which the information indicating the first resource is DCI. For ease of differentiation, the DCI is referred to as DCI of the secondary network device. A name of the DCI is not limited in this application. It should be understood that the primary network device receives the DCI of the secondary network device, for example, may forward the DCI of the secondary network device. In this case, the first information may be the DCI of the secondary network device or at least one indication field in the DCI. Alternatively, when the primary network device receives the DCI of the secondary network device, the primary network device may parse the DCI of the secondary network device to understand a physical meaning of each field in the DCI of the secondary network device, and the primary network device may further generate the first information based on the physical meaning of each field in the DCI of the secondary network device. In this case, the first information may be DCI (referred to as DCI of the primary network device for ease of differentiation) or at least one indication field in the DCI.
2. The primary network device cannot parse the information indicating the first resource. For example, the primary network device may forward the information indicating the first resource, in other words, the first information and the information indicating the first resource are same information.

In a possible implementation, that the first information indicates the first resource includes: The first information indicates the first resource and indicates that the first resource is for communication between the terminal device and the secondary network device. An example in which the first information is DCI is used to state that "the first information indicates the first resource and indicates that the first resource is for communication between the terminal device and the secondary network device". Specifically, at least one indication field in the DCI may indicate the first resource and indicate that the first resource is for communication between the terminal device and the secondary network device. For example, the first resource may be determined based on a time-frequency domain position of a PUSCH resource or a time-frequency domain position of a PDSCH resource in the DCI. For example, a DCI format identifier in the DCI may indicate that the first resource is for communication between the terminal device and the secondary network device. For example, 1 bit in the DCI may indicate that the first resource is for communication between the terminal device and the secondary network device. For example, if a value of the bit is 0 or 1, it indicates that the first resource is for communication between the terminal device and the secondary network device. For example, a format of the DCI is a format used by the secondary network device. This is equivalent to a case in which a format of DCI used by the primary network device is different from the format of the DCI used by the secondary network device. In this way, the terminal device may learn, based on the format of the DCI, that the first resource indicated by the DCI is for communication between the terminal device and the secondary network device.

In a possible implementation, the first information may further include the information indicating the third resource. For example, when the first resource is for downlink communication between the terminal device and the secondary network device, the first information may further include the information indicating the third resource.

In a possible implementation, the primary network device may further send second information to the terminal device. For example, before step 302, the primary network device sends the second information to the terminal device. The second information indicates the terminal device to receive, from the primary network device, information indicating a resource for communication between the terminal device and the secondary network device. In a possible implementation, the primary network device may generate the second information or forward the second information from the secondary network device. The following separately describes the two manners with reference to examples. Details are as follows.
1. The primary network device generates (where generating may be understood as determining or obtaining) the second information. For example, when the terminal device establishes the first communication connection to the primary network device, and the terminal device establishes the second communication connection to the secondary network device, the primary network device generates the second information, and sends, to the terminal device, a message carrying the second information. The message may be an RRC message (for example, an RRC configuration message or an RRC reconfiguration message), DCI, a medium access control-control element (medium access control-control element, MAC CE), or the like.

In a possible implementation, the second information may be a part or all of configuration information of the primary network device.

It should be noted that, in this application, the configuration information of the primary network device may include a configuration parameter of a radio bearer (radio bearer, RB) between the terminal device and the primary network device, for example, a configuration parameter of a signaling radio bearer (signaling radio bearer, SRB) for signaling data transmission and/or a configuration parameter of a data radio bearer (data radio bearer, DRB) for service data transmission. This is not limited in this application.

2. The primary network device forwards the second information from the secondary network device. In other words, the secondary network device may send the second information to the terminal device via the primary network device, and the second information may be generated, determined, or obtained by the primary network device. For example, the secondary network device sends, to the primary network device, a first message (for example, a secondary station addition response message or another message) carrying the second information. The primary network device generates, based on the first message, a second message (for example, an RRC message (for example, an RRC configuration message or an RRC reconfiguration message), DCI, or a MAC CE) carrying the second information, and sends the second message to the terminal device.

In a possible implementation, the second information may be a part or all of configuration information of the secondary network device.

It should be noted that, in this application, the configuration information of the secondary network device may include a configuration parameter of an RB between the terminal device and the secondary network device, for example, a configuration parameter of an SRB for signaling data transmission and/or a configuration parameter of a DRB for service data transmission. This is not limited in this application.

Optionally, the "information indicating a resource for communication between the terminal device and the secondary network device" may be described as DCI of the secondary network device or at least one indication field in the DCI. Optionally, the DCI may be carried on a PDCCH. In this case, for example, that the second information indicates the terminal device to receive, from the primary network device, the information indicating the resource for communication between the terminal device and the secondary network device may be understood as at least one of the following: The second information indicates the terminal device to monitor DCI of the secondary network device on the primary network device; the second information indicates the terminal device to monitor a PDCCH on the primary network device to obtain the DCI of the secondary network device; the second information indicates the terminal device not to monitor the DCI of the secondary network device on the secondary network device; and the second information indicates the terminal device not to monitor a PDCCH on the secondary network device.

In a possible implementation, step 302 may include: The primary network device sends the first information to the terminal device on a second resource. There may be at least one of the following implementations in which the second resource is for transmitting the information indicating the resource for communication between the terminal device and the secondary network device. Details are as follows.
1. The second resource may be a downlink resource dedicated to transmitting the information indicating the resource for communication between the terminal device and the secondary network device, for example, a part or all of the downlink resource.

In a possible implementation, the downlink resource may include a downlink control resource and/or a downlink data resource. Optionally, the downlink control resource may be a PDCCH resource. The downlink data resource may be a PDSCH resource.

In a possible implementation, when the second resource is a part of the downlink resource dedicated to transmitting the information indicating the resource for communication between the terminal device and the secondary network device, the primary network device may schedule a remaining resource for downlink transmission.

2. The second resource may be a downlink resource for transmitting information indicating a resource for communication between the terminal device and the primary network device, for example, a part or all of the downlink resource.

In a possible implementation, when the second resource is a part of the downlink resource for transmitting the information indicating the resource for communication between the terminal device and the primary network device, the primary network device may schedule a remaining resource for downlink transmission.

In a possible implementation, the primary network device may further send third information to the terminal device, where the third information indicates the second resource. The primary network device may generate the third information or forward the third information from the secondary network device. The following separately describes the two manners with reference to examples. Details are as follows.
1. The primary network device generates the third information.

For example, when the primary network device allocates the second resource to the terminal device, the primary network device generates the third information, and sends, to the terminal device, a message carrying the third information. The message may be an RRC message (for example, an RRC configuration message or an RRC reconfiguration message), DCI, a medium access control-control element (medium access control-control element, MAC CE), or the like.

In a possible implementation, the primary network device may further send, to the secondary network device, information indicating a sixth resource. The sixth resource may be for transmitting the information indicating the resource for communication between the terminal device and the secondary network device. Optionally, the sixth resource may be a part or all of the second resource. Optionally, the information indicating the sixth resource may be included in a resource sharing confirmation message or another message.

For another example, the primary network device may receive, from the secondary network device, information indicating a fourth resource, and determine, based on the fourth resource, to generate the third information. The fourth resource may include the second resource. For example, the second resource may be a part or all of the fourth resource. The fourth resource may be a downlink resource dedicated to transmitting the information indicating the resource for communication between the terminal device and the secondary network device, for example, a part or all of the downlink resource. Alternatively, the fourth resource may be a downlink resource for transmitting the information indicating the resource for communication between the terminal device and the primary network device, for example, a part or all of the downlink resource. Optionally, the information indicating the fourth resource may be included in a secondary station addition response message or another message.

In a possible implementation, the primary network device may further send, to the secondary network device, information indicating a fifth resource, where the fifth resource is for determining the fourth resource. For example, the fourth resource may be a part or all of the fifth resource. For example, the fourth resource is different from the fifth resource. For example, the fourth resource is after the fifth resource in time domain. A relationship between the fourth resource and the fifth resource is not limited in this application. The fifth resource may be a downlink resource dedicated to transmitting the information indicating the resource for communication between the terminal device and the secondary network device, for example, a part or all of the downlink resource. Alternatively, the fifth resource may be a downlink resource for transmitting the information indicating the resource for communication between the terminal device and the primary network device, for example, a part or all of the downlink resource. Optionally, the information indicating the fifth resource may be included in a secondary station addition request message, a resource sharing confirmation message, a response message, or another message.

In a possible implementation, the third information may be a part or all of configuration information of the primary network device. Optionally, the third information and the second information in the implementation in which "the primary network device generates the second information" may be included in different messages, or a same indication field or different indication fields of different messages, or a same message, or a same indication field of a same message, or the like.

When the third information and the second information are included in different messages or different indication fields of different messages, for example, the third information is included in an RRC message (for example, an RRC configuration message or an RRC reconfiguration message), and the second information is included in DCI or a MAC CE, it may be considered that the third information further includes an indication indicating the terminal device not to receive, from the primary network device, the information indicating the resource for communication between the terminal device and the secondary network device. This is equivalent to a case in which an operation that the terminal device receives, from the primary network device, the information indicating the resource for communication between the terminal device and the secondary network device is not activated. In this case, the network device may further send the second information to the terminal device to activate the operation.

When the third information and the second information are included in a same message or a same indication field of a same message, for example, both the third information and the second information are included in an RRC message (for example, an RRC configuration message or an RRC reconfiguration message), it may be considered that the RRC message activates a process in which the terminal device receives, from the primary network device, the information indicating the resource for communication between the terminal device and the secondary network device.

2. The primary network device forwards the third information from the secondary network device. In other words, the secondary network device sends the third information to the terminal device via the primary network device, and the third information may be generated, determined, or obtained by the primary network device. For example, the secondary network device sends, to the primary network device, a third message (for example, a secondary station addition response message or another message) carrying the third information. The primary network device generates, based on the third message, a fourth message (for example, an RRC message (for example, an RRC configuration message or an RRC reconfiguration message), DCI, or a MAC CE) carrying the third information, and sends the fourth message to the terminal device. Optionally, the first message and the third message may be a same message or different messages. The second message and the fourth message may be a same message or different messages. In a possible implementation, the third information may be a part or all of configuration information of the secondary network device.

Optionally, the primary network device may further receive, from the terminal device, information indicating that the terminal device successfully receives the third information. Correspondingly, the terminal device may send the information to the network device. For example, after receiving the third information, the terminal device may send, to the network device, the information indicating that the terminal device successfully receives the third information. Optionally, the information may be included in an RRC message (for example, an RRC reconfiguration complete message or an RRC configuration complete message).

In a possible implementation, the primary network device may further receive, from the secondary network device, information indicating a timing advance of the secondary network device. In this way, the third information may further include the information indicating the timing advance of the secondary network device. It should be understood that when the terminal device receives the information indicating the timing advance of the secondary network device, the terminal device may further synchronize with the secondary network device based on the timing advance of the secondary network device, for example, perform uplink time synchronization.

In a possible implementation, the primary network device may further determine a first time instant, where the first time instant is a time instant at which the primary network device sends the first information to the terminal device. In this case, the primary network device may send the first information to the terminal device based on the first time instant. For example, the primary network device sends the first information to the terminal device before the first time instant or at the first time instant. The primary network device may determine the first time instant in at least one of the following manners. Details are as follows.
1. The primary network device receives the information indicating the first resource, and the primary network device may parse the information indicating the first resource. Therefore, the primary network device may determine the first time instant based on the first resource and time information between the primary network device and the secondary network device. For example, the primary network device may determine the first time instant based on a position of the first resource in time domain and the time information. In a possible implementation, the first time instant is, for example, at least one of an SFN, a slot number, and a symbol number of a cell of the primary network device.
   The time information between the primary network device and the secondary network device may be, for example, an SFTD. A specific implementation of the time information is not limited in this application.
2. The primary network device receives the information indicating the first resource, and the primary network device cannot parse the information indicating the first resource. In this case, the primary network device may further receive auxiliary information from the secondary network device.

For example, the auxiliary information indicates the first time instant or includes the first time instant. This is equivalent to a case in which the secondary network device may determine the first time instant based on the position of the first resource in time domain and the time information, to indicate the first time instant by using the auxiliary information.

For example, the auxiliary information indicates reference time or includes reference time. For example, the reference time is time at which the secondary network device expects the primary network device to send the first information to the terminal device. The reference time may be at least one of an SFN, a slot number, a symbol number, and the like of a cell of the secondary network device. In this case, the primary network device may determine the first time instant based on the reference time and the time information between the primary network device and the secondary network device.

In a possible implementation, the primary network device may further receive first indication information from the terminal device or the secondary network device, or the primary network device may further receive fourth indication information from the secondary network device.

The first indication information indicates or is for requesting to send, to the terminal device via the primary network device, the information indicating the resource for communication between the terminal device and the secondary network device. Optionally, the first indication information is included in a message, and the message may be UCI, a secondary station addition response message, another message, or the like.

For example, the primary network device receives the first indication information from the terminal device, where the first indication information may be included in the UCI or another message.

For example, the primary network device receives the first indication information from the secondary network device, where the first indication information is included in a secondary station addition response message or another message. In this case, that the first indication information indicates or is for requesting to send, to the terminal device via the primary network device, the information indicating the resource for communication between the terminal device and the secondary network device may also be described as follows: The first indication information indicates the secondary network device to send, to the terminal device via the primary network device, the information indicating the resource for communication between the terminal device and the secondary network device. Optionally, for example, the first indication information and at least one of the second information, the third information, and the like may be included in different messages, or different indication fields of different messages, or a same message, or a same indication field of a same message.

The fourth indication information indicates not to send, to the terminal device via the primary network device, the information indicating the resource for communication between the terminal device and the secondary network device. For example, it may be understood as follows: The fourth indication information indicates not to send, to the terminal device via the primary network device, DCI of the secondary network device. In this case, the terminal device may directly obtain, from the secondary network device, the information indicating the resource for communication between the terminal device and the secondary network device. Optionally, the fourth indication information may be included in a secondary station addition response message or another message.

In an example, the primary network device may further send second indication information to the secondary network device. For example, the primary network device may send the second indication information to the secondary network device based on a capability of the terminal device and a power saving requirement of the terminal device. The capability of the terminal device may include whether the terminal device supports receiving, from the primary network device, the information indicating the resource for communication between the terminal device and the secondary network device, and the like. The second indication information indicates that the primary network device supports sending, to the terminal device, the information indicating the resource for communication between the terminal device and the secondary network device. Optionally, the second indication information may be included in a secondary station addition request message or another message. Optionally, the second indication information and the information indicating the fifth resource may be included in different messages, or different indication fields of different messages, or a same message, or a same indication field of a same message, or the like.

In a possible implementation, the primary network device sends the second indication information to the secondary network device, so that the secondary network device can receive the second indication information. Then, the secondary network device may send the first indication information or the fourth indication information to the primary network device, to notify the primary network device whether the information indicating the resource for communication between the terminal device and the secondary network device is sent to the terminal device via the primary network device.

In another example, the primary network device may further send third indication information to the terminal device or the secondary network device. Alternatively, the primary network device may further send fifth indication information to the secondary network device.

The third indication information indicates that sending, to the terminal device via the primary network device, the information indicating the resource for communication between the terminal device and the secondary network device is allowed. Optionally, the third indication information is included in a message, and the message may be DCI, an RRC message (for example, an RRC configuration message or an RRC reconfiguration message), a MAC CE, a resource sharing confirmation message, a response message, or another message.

For example, the primary network device sends the third indication information to the terminal device, where the third indication information may be included in DCI, an RRC message (for example, an RRC configuration message or an RRC reconfiguration message), or a MAC CE.

For example, the primary network device sends the third indication information to the secondary network device, where the third indication information may be included in a resource sharing confirmation message, a response message, or another message. In this case, the third indication information and the information indicating the fifth resource may be included in different messages, or different indication fields of different messages, or a same message, or a same indication field of a same message, or the like. Alternatively, the third indication information and the information indicating the sixth resource may be included in different messages, or different indication fields of different messages, or a same message, or a same indication field of a same message, or the like.

The fifth indication information indicates that sending, to the terminal device via the primary network device, the information indicating the resource for communication between the terminal device and the secondary network device is not allowed. For example, it may be understood as follows: The fifth indication information indicates that sending, to the terminal device via the primary network device, DCI of the secondary network device and the like are not allowed. In this case, the terminal device may directly obtain, from the secondary network device, the information indicating the resource for communication between the terminal device and the secondary network device. Optionally, the fifth indication information may be included in a secondary station addition response message or another message.

In a possible implementation, after receiving the first indication information from the secondary network device, the primary network device may send the third indication information or the fifth indication information to the secondary network device, to notify the secondary network device whether the information indicating the resource for communication between the terminal device and the secondary network device can be sent to the terminal device via the primary network device.

It can be learned that, in the foregoing embodiment, when the first communication connection exists between the terminal device and the primary network device, and the second communication connection exists between the terminal device and the secondary network device, the secondary network device may send, to the primary network device, the information indicating the first resource, so that the primary network device can send the first information indicating the first resource. The first resource may be for communication between the terminal device and the secondary network device. In other words, the terminal device may obtain, by monitoring signals from the primary network device, the first resource for communication between the terminal device and the secondary network device. As a result, the terminal device does not need to monitor signals from the secondary network device. In this way, the power consumption of the terminal device is reduced, thereby achieving energy saving of the terminal device.

In a possible implementation, the primary network device may further send fourth information to the terminal device. For example, the primary network device has insufficient resources or the primary network device receives an indication from the secondary network device, so that the primary network device sends the fourth information to the terminal device. The fourth information indicates the terminal device to stop receiving, from the primary network device, the information indicating the resource for communication between the terminal device and the secondary network device. Optionally, the fourth information may be included in a message, and the message may be DCI, an RRC message (for example, an RRC configuration message or an RRC reconfiguration message), a MAC CE, or another message.

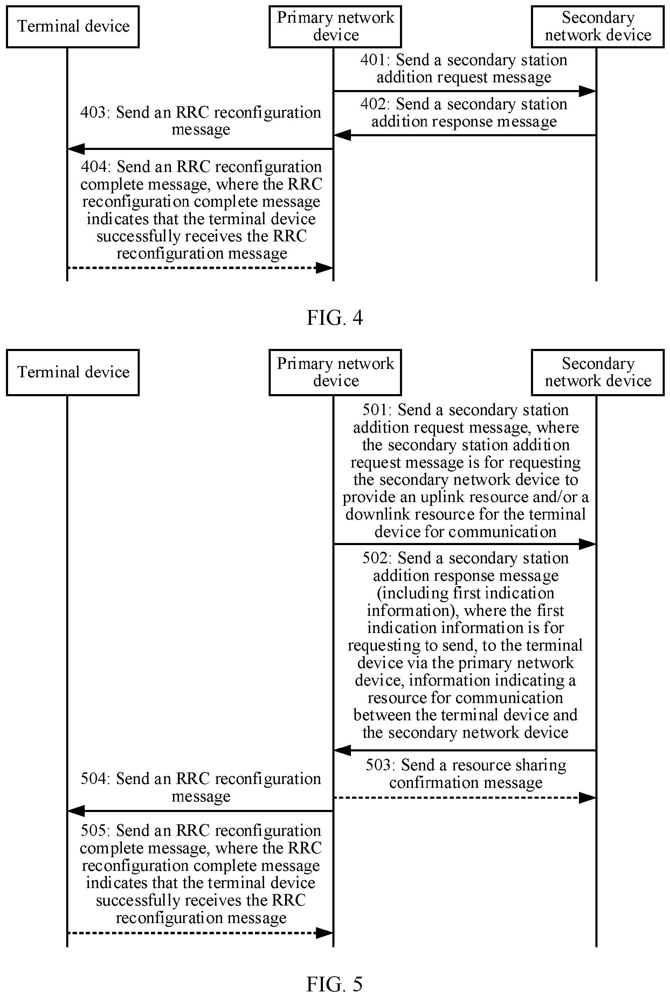

The foregoing method embodiment shown in FIG. 3 includes many possible implementation solutions. The following describes a part of the implementation solutions by using examples with reference to FIG. 4, FIG. 5 or FIG. 6. It should be noted that, for related concepts, operations, or logical relationships that are not explained in FIG. 4, FIG. 5 or FIG. 6, refer to the corresponding descriptions in the embodiment shown in FIG. 3. Therefore, details are not described again. Optionally, an embodiment shown in FIG. 4, FIG. 5, or FIG. 6 may be performed before step 301 in FIG. 3.

FIG. 4 is a schematic flowchart of another communication method according to an embodiment of this application. The method includes but is not limited to the following steps.

401: A primary network device sends a secondary station addition request message to the secondary network device.

Correspondingly, the secondary network device receives the secondary station addition request message from the primary network device. Optionally, the secondary station addition request message may be for requesting the secondary network device to provide an uplink resource and/or a downlink resource for a terminal device for communication.

In a possible implementation, the secondary station addition request message may include at least one of the following: second indication information and information indicating a fifth resource. The second indication information indicates that the primary network device supports sending, to the terminal device, information indicating a resource for communication between the terminal device and the secondary network device. Alternatively, the second indication information indicates the secondary network device to send, to the terminal device via the primary network device, the information indicating the resource for communication between the terminal device and the secondary network device. The fifth resource is for determining a fourth resource. For example, the fourth resource may be a part or all of the fifth resource. For example, the fourth resource is different from the fifth resource. For example, the fourth resource is after the fifth resource in time domain. A relationship between the fourth resource and the fifth resource is not limited in this application.

The fourth resource may include a second resource.

402: The secondary network device sends a secondary station addition response message to the primary network device.

Correspondingly, the primary network device receives the secondary station addition response message from the secondary network device.

In a possible implementation, the secondary station addition response message may include at least one of the following: first indication information, information indicating the fourth resource, and second information. The first indication information indicates to send, to the terminal device via the primary network device, the information indicating the resource for communication between the terminal device and the secondary network device. The second information indicates the terminal device to receive, from the primary network device, the information indicating the resource for communication between the terminal device and the secondary network device. Optionally, the secondary station addition response message may further include configuration information of the secondary network device. In an example, at least one of the information indicating the fourth resource and the second information may be included in the configuration information of the secondary network device.

In another possible implementation, the secondary station addition response message may include fourth indication information, and the fourth indication information indicates not to send, to the terminal device via the primary network device, the information indicating the resource for communication between the terminal device and the secondary network device. For example, it may be understood as follows: The fourth indication information indicates not to send, to the terminal device via the primary network device, DCI of the secondary network device. In this case, the terminal device may directly obtain, from the secondary network device, the information indicating the resource for communication between the terminal device and the secondary network device.

403: The primary network device sends an RRC reconfiguration message to the terminal device.

Correspondingly, the terminal device receives the RRC reconfiguration message from the primary network device.

The RRC reconfiguration message may be used by the terminal device to receive, from the primary network device, the information indicating the resource for communication between the terminal device and the secondary network device.

In a possible implementation, the RRC reconfiguration message may include third information, and the third information indicates a second resource.

In a possible implementation, the RRC reconfiguration message may further include the configuration information of the secondary network device and/or configuration information of the primary network device. In an example, the third information may be included in the configuration information of the primary network device.

Optionally, the RRC reconfiguration message may further include the second information. For example, when the RRC reconfiguration message includes the configuration information of the primary network device, the RRC reconfiguration message may further include the second information. The second information indicates the terminal device to receive, from the primary network device, the information indicating the resource for communication between the terminal device and the secondary network device. In an example, the second information may be included in the configuration information of the primary network device.

Optionally, after step 403, step 404 may be further performed.

404: The terminal device sends an RRC reconfiguration complete message to the primary network device, where the RRC reconfiguration complete message indicates that the terminal device successfully receives the RRC reconfiguration message.

It can be learned that, in the foregoing embodiment, the primary network device, the secondary network device, and the terminal device exchange various pieces of information, so that these devices have consistent understanding of "receiving, from the primary network device, the information indicating the resource for communication between the terminal device and the secondary network device", thereby ensuring smooth execution of the solution.

FIG. 5 is a schematic flowchart of another communication method according to an embodiment of this application. The method includes but is not limited to the following steps.

501: A primary network device sends a secondary station addition request message to a secondary network device, where the secondary station addition request message is for requesting the secondary network device to provide an uplink resource and/or a downlink resource for a terminal device for communication.

Correspondingly, the secondary network device receives the secondary station addition request message from the primary network device.

502: The secondary network device sends a secondary station addition response message to the primary network device, where the secondary station addition response message includes first indication information, and the first indication information is for requesting to send, to the terminal device via the primary network device, information indicating a resource for communication between the terminal device and the secondary network device.

Correspondingly, the primary network device receives the secondary station addition response message from the secondary network device.

In a possible implementation, the secondary station addition response message may further include configuration information of the secondary network device.

503: The primary network device sends a resource sharing confirmation message to the secondary network device.

Correspondingly, the secondary network device receives the resource sharing confirmation message from the primary network device.

In a possible implementation, the resource sharing confirmation message may include at least one of the following: third indication information and information indicating a sixth resource. The third indication information indicates that sending, to the terminal device via the primary network device, the information indicating the resource for communication between the terminal device and the secondary network device is allowed. The sixth resource is a part or all of a second resource.

The sixth resource may be for transmitting the information indicating the resource for communication between the terminal device and the secondary network device. It should be understood that, when the primary network device allocates the second resource to the terminal device, the primary network device may send, to the secondary network device, the information indicating the sixth resource, in other words, the primary network device indicates a resource that may be for transmitting the information indicating the resource for communication between the terminal device and the secondary network device.

In another possible implementation, the resource sharing confirmation message may include fifth indication information, and the fifth indication information indicates that sending, to the terminal device via the primary network device, the information indicating the resource for communication between the terminal device and the secondary network device is not allowed. For example, it may be understood as follows: The fifth indication information indicates that sending, to the terminal device via the primary network device, DCI of the secondary network device and the like are not allowed. In this case, the terminal device may directly obtain, from the secondary network device, the information indicating the resource for communication between the terminal device and the secondary network device.

Step 503 may be performed or may not be performed.

504: The primary network device sends an RRC reconfiguration message to the terminal device.

Correspondingly, the terminal device receives the RRC reconfiguration message from the primary network device.

Step 504 is similar to step 403 in FIG. 4. Details are not described herein again.

Optionally, after step 504, step 505 may be further performed.

505: The terminal device sends an RRC reconfiguration complete message to the primary network device, where the RRC reconfiguration complete message indicates that the terminal device successfully receives the RRC reconfiguration message.

It can be learned that, in the foregoing embodiment, the primary network device, the secondary network device, and the terminal device exchange various pieces of information, so that these devices have consistent understanding of "receiving, from the primary network device, the information indicating the resource for communication between the terminal device and the secondary network device", thereby ensuring smooth execution of the solution.

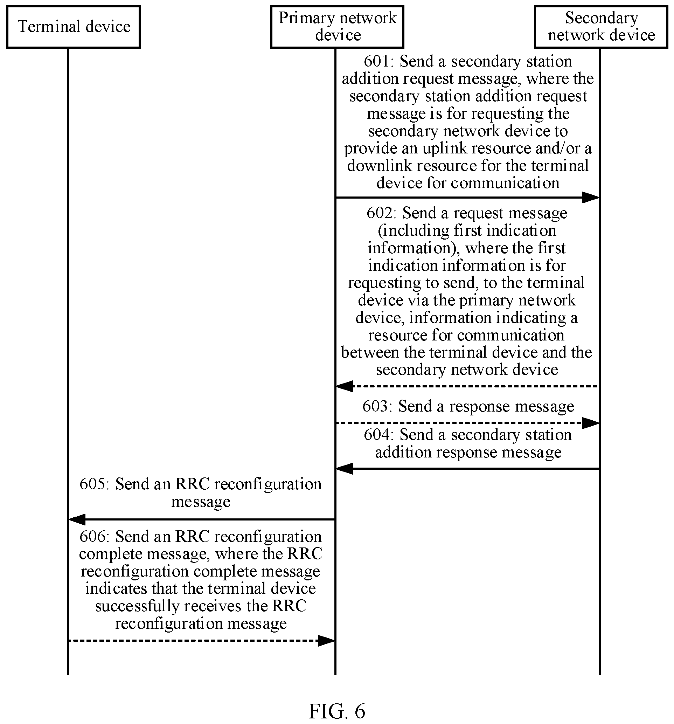

FIG. 6 is a schematic flowchart of another communication method according to an embodiment of this application. The method includes but is not limited to the following steps.

601: A primary network device sends a secondary station addition request message to a secondary network device, where the secondary station addition request message is for requesting the secondary network device to provide an uplink resource and/or a downlink resource for a terminal device for communication.

Correspondingly, the secondary network device receives the secondary station addition request message from the primary network device.

602: The secondary network device sends a request message to the primary network device, where the request message includes first indication information, and the first indication information is for requesting to send, to the terminal device via the primary network device, information indicating a resource for communication between the terminal device and the secondary network device.

Correspondingly, the primary network device receives the request message from the secondary network device.

Step 602 may be performed or may not be performed.

603: The primary network device sends a response message to the secondary network device.

Correspondingly, the secondary network device receives the response message from the primary network device.

In a possible implementation, the response message may include at least one of the following: third indication information and information indicating a fifth resource. The third indication information indicates that sending, to the terminal device via the primary network device, the information indicating the resource for communication between the terminal device and the secondary network device is allowed. The fifth resource is for determining a fourth resource. For example, the fourth resource may be a part or all of the fifth resource. For example, the fourth resource is different from the fifth resource. For example, the fourth resource is after the fifth resource in time domain. A relationship between the fourth resource and the fifth resource is not limited in this application. The fourth resource may include a second resource.

In another possible implementation, the response message may include fifth indication information. The fifth indication information indicates that sending, to the terminal device via the primary network device, the information indicating the resource for communication between the terminal device and the secondary network device is not allowed. For example, it may be understood as follows: The fifth indication information indicates that sending, to the terminal device via the primary network device, DCI of the secondary network device and the like are not allowed. In this case, the terminal device may directly obtain, from the secondary network device, the information indicating the resource for communication between the terminal device and the secondary network device.

Step 603 may be performed or may not be performed. For example, when step 602 is performed, step 603 may be performed or may not be performed. When step 602 is not performed, step 603 is not performed either.

604: The secondary network device sends a secondary station addition response message to the primary network device.

Correspondingly, the primary network device receives the secondary station addition response message from the secondary network device.

In a possible implementation, the secondary station addition response message may include at least one of the following: first indication information, information indicating the fourth resource, and second information. The first indication information indicates to send, to the terminal device via the primary network device, the information indicating the resource for communication between the terminal device and the secondary network device. The second information indicates the terminal device to receive, from the primary network device, the information indicating the resource for communication between the terminal device and the secondary network device. Optionally, the secondary station addition response message may further include configuration information of the secondary network device. In an example, at least one of the information indicating the fourth resource and the second information may be included in the configuration information of the secondary network device.

605: The primary network device sends an RRC reconfiguration message to the terminal device.

Correspondingly, the terminal device receives the RRC reconfiguration message from the primary network device.

Step 605 is similar to step 403 in FIG. 4. Details are not described herein again.

Optionally, after step 605, step 606 may be further performed.

606: The terminal device sends an RRC reconfiguration complete message to the primary network device, where the RRC reconfiguration complete message indicates that the terminal device successfully receives the RRC reconfiguration message.

Optionally, step 606 may be performed or may not be performed. This is not limited herein.

It can be learned that, in the foregoing embodiment, the primary network device, the secondary network device, and the terminal device exchange various pieces of information, so that these devices have consistent understanding of "receiving, from the primary network device, the information indicating the resource for communication between the terminal device and the secondary network device", thereby ensuring smooth execution of the solution.

It may be understood that, to implement the foregoing functions, the devices include corresponding hardware structures and/or software modules for executing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the network device (for example, the primary network device or the secondary network device) may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

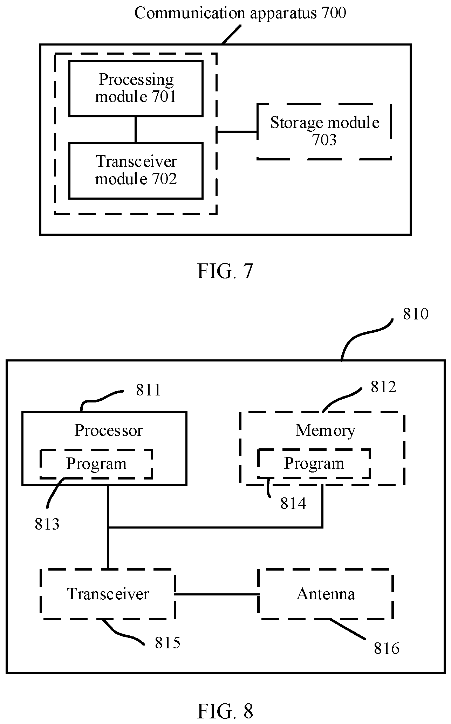

FIG. 7 is a diagram of a structure of a communication apparatus according to an embodiment of this application. The communication apparatus 700 may be used in the method shown in any one of the foregoing embodiments in FIG. 3 to FIG. 6. As shown in FIG. 7, the communication apparatus 700 includes a processing module 701 and a transceiver module 702. The processing module 701 may be one or more processors, and the transceiver module 702 may be a transceiver or a communication interface. The communication apparatus may be configured to implement the terminal device or the network device (for example, the primary network device or the secondary network device) in any one of the foregoing method embodiments, or configured to implement a function of a network element in any one of the foregoing method embodiments. The network element or network function may be a network element in a hardware device, a software function running on dedicated hardware, or a virtualized function instantiated on a platform (for example, a cloud platform). Optionally, the communication apparatus 700 may further include a storage module 703, configured to store program code and data that are of the communication apparatus 700.

In an instance, when the communication apparatus is used as a terminal device or a chip used in the terminal device, the communication apparatus performs the steps performed by the terminal device in the foregoing method embodiments. The transceiver module 702 is specifically configured to perform a sending and/or receiving action performed by the terminal device in any one of embodiments in FIG. 3 to FIG. 6, for example, support the terminal device in performing another process of the technology described in this specification. The processing module 701 may be configured to support the communication apparatus 700 in performing a processing action in the foregoing method embodiments, for example, support the terminal device in performing another process of the technology described in this specification.

For example, the transceiver module 702 is configured to receive first information from a primary network device, where the first information indicates a first resource, and the first resource is for communication between a terminal device and a secondary network device. A first communication connection exists between the terminal device and the primary network device, and a second communication connection exists between the terminal device and the secondary network device.

In a possible implementation, the transceiver module 702 is further configured to receive second information from the primary network device, where the second information indicates the terminal device to receive, from the primary network device, information indicating a resource for communication between the terminal device and the secondary network device.

In a possible implementation, when receiving the first information from the primary network device, the transceiver module 702 is configured to receive the first information from the primary network device on a second resource. The second resource is for transmitting the information indicating the resource for communication between the terminal device and the secondary network device.

In a possible implementation, the transceiver module 702 is further configured to receive third information from the primary network device, where the third information indicates the second resource.

In a possible implementation, the transceiver module 702 is further configured to receive fourth information from the primary network device, where the fourth information indicates the terminal device to stop receiving, from the primary network device, the information indicating the resource for communication between the terminal device and the secondary network device.

In an instance, when the communication apparatus is used as a network device (for example, a primary network device or a secondary network device) or a chip used in the network device (for example, the primary network device or the secondary network device), the communication apparatus performs the steps performed by the network device (for example, the primary network device or the secondary network device) in the foregoing method embodiments. The transceiver module 702 is specifically configured to perform a sending and/or receiving action performed by the network device (for example, the primary network device or the secondary network device) in any one of embodiments in FIG. 3 to FIG. 6, for example, support the network device (for example, the primary network device or the secondary network device) in performing another process of the technology described in this specification. The processing module 701 may be configured to support the communication apparatus 700 in performing a processing action in the foregoing method embodiments, for example, support the network device (for example, the primary network device or the secondary network device) in performing another process of the technology described in this specification.

For example, the transceiver module 702 is configured to: receive, from the secondary network device, information indicating a first resource, where the first resource is for communication between the terminal device and the secondary network device; and send first information to the terminal device, where the first information indicates the first resource. A first communication connection exists between the terminal device and the primary network device.

In a possible implementation, the transceiver module 702 is further configured to send second information to the terminal device, where the second information indicates the terminal device to receive, from the primary network device, information indicating a resource for communication between the terminal device and the secondary network device.

In a possible implementation, when sending the first information to the terminal device, the transceiver module 702 is configured to send the first information to the terminal device on a second resource. The second resource is for transmitting the information indicating the resource for communication between the terminal device and the secondary network device.

In a possible implementation, the transceiver module 702 is further configured to send third information to the terminal device, where the third information indicates the second resource.

In a possible implementation, the transceiver module 702 is further configured to receive, from the secondary network device, information indicating a timing advance of the secondary network device. The third information further includes the information indicating the timing advance of the secondary network device.

In a possible implementation, the processing module 701 is further configured to determine a first time instant, where the first time instant is a time instant at which the primary network device sends the first information to the terminal device. When sending the first information to the terminal device, the transceiver module 702 is configured to send the first information to the terminal device based on the first time instant.

In a possible implementation, the transceiver module 702 is further configured to send fourth information to the terminal device, where the fourth information indicates the terminal device to stop receiving, from the primary network device, the information indicating the resource for communication between the terminal device and the secondary network device.

In a possible implementation, the transceiver module 702 is further configured to receive first indication information from the terminal device or the secondary network device, where the first indication information indicates to send, to the terminal device via the primary network device, the information indicating the resource for communication between the terminal device and the secondary network device.

In a possible implementation, the transceiver module 702 is further configured to send second indication information to the secondary network device, where the second indication information indicates that the primary network device supports sending, to the terminal device, the information indicating the resource for communication between the terminal device and the secondary network device.

In a possible implementation, the transceiver module 702 is further configured to send third indication information to the terminal device or the secondary network device, where the third indication information indicates that sending, to the terminal device via the primary network device, the information indicating the resource for communication between the terminal device and the secondary network device is allowed.

In a possible implementation, the transceiver module 702 is further configured to receive, from the secondary network device, information indicating a fourth resource. The fourth resource is for transmitting the information indicating the resource for communication between the terminal device and the secondary network device. The fourth resource includes the second resource.

In a possible implementation, the transceiver module 702 is further configured to send, to the secondary network device, information indicating a fifth resource, where the fifth resource is for determining the fourth resource. The fifth resource is for transmitting the information indicating the resource for communication between the terminal device and the secondary network device.

In a possible implementation, the transceiver module 702 is further configured to receive the second information from the secondary network device, where the second information indicates the terminal device to receive, from the primary network device, the information indicating the resource for communication between the terminal device and the secondary network device.

For another example, the transceiver module 702 is configured to send, to the primary network device, the information indicating the first resource, where the first resource is for communication between the terminal device and the secondary network device. A second communication connection exists between the terminal device and the secondary network device.

In a possible implementation, the transceiver module 702 is further configured to send, to the primary network device, information indicating a third resource, where the third resource is used by the terminal device to send feedback information to the secondary network device, and the feedback information is for feeding back a reception status of data corresponding to the first resource.

In a possible implementation, the transceiver module 702 is further configured to send the first indication information to the primary network device, where the first indication information indicates to send, to the terminal device via the primary network device, the information indicating the resource for communication between the terminal device and the secondary network device.

In a possible implementation, the transceiver module 702 is further configured to receive the second indication information from the primary network device, where the second indication information indicates that the primary network device supports sending, to the terminal device, the information indicating the resource for communication between the terminal device and the secondary network device.

In a possible implementation, the transceiver module 702 is further configured to receive the third indication information from the primary network device, where the third indication information indicates that sending, to the terminal device via the primary network device, the information indicating the resource for communication between the terminal device and the secondary network device is allowed.

In a possible implementation, the transceiver module 702 is further configured to send, to the primary network device, the information indicating the fourth resource. The fourth resource is for transmitting the information indicating the resource for communication between the terminal device and the secondary network device. The fourth resource includes the second resource.

In a possible implementation, the transceiver module 702 is further configured to receive, from the primary network device, the information indicating the fifth resource, where the fifth resource is for determining the fourth resource. The fifth resource is for transmitting the information indicating the resource for communication between the terminal device and the secondary network device.

In a possible implementation, the transceiver module 702 is further configured to send the second information to the primary network device, where the second information indicates the terminal device to receive, from the primary network device, the information indicating the resource for communication between the terminal device and the secondary network device.

In a possible implementation, when the terminal device or the network device (for example, the primary network device or the secondary network device) is a chip, the transceiver module 702 may be a communication interface, a pin, a circuit, or the like. The communication interface may be configured to input to-be-processed data to a processor, and may output a processing result of the processor to the outside. In a specific implementation, the communication interface may be a general-purpose input/output (general-purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 701 may be a processor. The processor may execute computer-executable instructions stored in the storage module, so that the chip performs the method in any one of embodiments shown in FIG. 3 to FIG. 6. Further, the processor may include a controller, an arithmetic logic unit, and a register. For example, the controller is mainly responsible for instruction decoding, and sending a control signal for an operation corresponding to the instructions. The arithmetic logic unit is mainly responsible for performing a fixed-point or floating-point arithmetic operation, a shift operation, a logic operation, and the like, and may also perform an address operation and address translation. The register is mainly responsible for saving register operands, intermediate operation results, and the like that are temporarily stored during instruction execution. In a specific implementation, a hardware architecture of the processor may be an ASIC architecture, a microprocessor without interlocked piped stages (microprocessor without interlocked piped stages, MIPS) architecture, an advanced reduced instruction set computer machine (advanced RISC machine, ARM) architecture, a second processor (network processor, NP) architecture, or the like. The processor may be a single-core or multi-core processor. The storage module may be a storage module, for example, a register or a cache, inside the chip. Alternatively, the storage module may be a storage module, for example, a ROM or another type of static storage device that can store static information and instructions, or a RAM, located outside the chip.

It should be noted that a function corresponding to each of the processor and the interface may be implemented by using a hardware design, a software design, or a combination of software and hardware. This is not limited herein.

FIG. 8 is a diagram of a structure of another communication apparatus according to an embodiment of this application. It may be understood that a communication apparatus 810 includes means in necessary forms, for example, modules, units, elements, circuits, or interfaces, that are appropriately configured together to perform the solution. The communication apparatus 810 may be the foregoing terminal device or network device (for example, the primary network device or the secondary network device), or may be a component (for example, a chip) in these devices, to implement the method described in the foregoing method embodiments. The communication apparatus 810 includes one or more processors 811. The processor 811 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a terminal device, a network device (for example, a primary network device or a secondary network device), or a chip); execute a software program; and process data of the software program.

Optionally, in a design, the processor 811 may include a program 813 (which may also be referred to as code or instructions sometimes), and the program 813 may be run on the processor 811, so that the communication apparatus 810 performs the method described in the foregoing embodiments. In another possible design, the communication apparatus 810 includes a circuit (not shown in FIG. 8), and the circuit is configured to implement functions of the terminal device, the network device (for example, the primary network device or the secondary network device), and the like in the foregoing embodiments. Optionally, the communication apparatus 810 may include one or more memories 812, and a program 814 (which may also be referred to as code or instructions sometimes) is stored in the memory. The program 814 may be run on the processor 811, so that the communication apparatus 810 performs the method described in the foregoing method embodiments.

Optionally, the processor 811 and/or the memory 812 may further store data. The processor and the memory may be separately disposed, or may be integrated together.

Optionally, the communication apparatus 810 may further include a transceiver 815 and/or an antenna 816. The processor 811 may also be sometimes referred to as a processing unit, and controls a communication apparatus (for example, a terminal device or a network device (for example, a primary network device or a secondary network device)). The transceiver 815 may also be sometimes referred to as a transceiver unit, a transceiver machine, a transceiver circuit, a transceiver, or the like, and is configured to implement a transceiver function of the communication apparatus through the antenna 816.

An embodiment of this application further provides a communication apparatus. The communication apparatus includes at least one processor, and the at least one processor is configured to perform the method according to any one of embodiments in FIG. 3 to FIG. 6.

An embodiment of this application further provides a computer-readable storage medium. The computer-readable storage medium stores computer instructions, and when the computer instructions are executed, a computer is caused to perform the method according to any one of embodiments in FIG. 3 to FIG. 6.

An embodiment of this application further provides a computer program product. The computer program product includes computer program code, and when the computer program code is run on a computer, the computer is caused to perform the method according to any one of embodiments in FIG. 3 to FIG. 6.

An embodiment of this application further provides a chip. The chip includes at least one processor and an interface, the processor is configured to read and execute instructions stored in a memory, and when the instructions are run, the chip is caused to perform the method according to any one of embodiments in FIG. 3 to FIG. 6.

The foregoing units described as separate parts may or may not be physically separate, and parts displayed as units may or may not be physical units, may be located at one position, or may be distributed on a plurality of network units. A part or all of the units may be selected based on actual requirements to achieve the objectives of the solutions of embodiments of this application. In addition, network element units in embodiments of this application may be integrated into one processing unit, or each of the units may exist alone physically, or two or more units may be integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such understanding, a part of the technical solutions of this application that essentially makes contributions, or all or a part of the technical solutions, may be embodied in a form of a software product. The computer software product is stored in a storage medium and includes several instructions for instructing a computer device (which may be a personal computer, a terminal device, a cloud server, a network device (for example, a primary network device or a secondary network device), or the like) to perform all or a part of the steps of the methods described in embodiments of this application. The storage medium includes any medium that can store program code, for example, a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving first information from a first network device, wherein the first information indicates a first resource, and the first resource is for communication between a terminal device and a second network device; and
a first communication connection exists between the terminal device and the first network device, and a second communication connection exists between the terminal device and the second network device.

2. The method according to claim 1, wherein the method further comprises:
receiving second information from the first network device, wherein the second information indicates the terminal device to receive, from the first network device, information indicating a resource for communication between the terminal device and the second network device.

3. The method according to claim 1 or 2, wherein the receiving the first information from the first network device comprises:
receiving the first information from the first network device on a second resource, wherein the second resource is for transmitting the information indicating the resource for communication between the terminal device and the second network device.

4. The method according to claim 3, wherein the method further comprises:
receiving third information from the first network device, wherein the third information indicates the second resource.

5. The method according to claim 3 or 4, wherein
the second resource is a downlink resource dedicated to transmitting the information indicating the resource for communication between the terminal device and the second network device; or
the second resource is a downlink resource for transmitting information indicating a resource for communication between the terminal device and the first network device.

6. The method according to any one of claims 1 to 5, wherein that the first information indicates the first resource comprises:
the first information indicates the first resource and indicates that the first resource is for communication between the terminal device and the second network device.

7. The method according to any one of claims 1 to 6, wherein the first information further comprises information indicating a third resource, the third resource is used by the terminal device to send feedback information to the second network device, and the feedback information is for feeding back a reception status of data corresponding to the first resource.

8. The method according to any one of claims 1 to 7, wherein the method further comprises:
receiving fourth information from the first network device, wherein the fourth information indicates the terminal device to stop receiving, from the first network device, the information indicating the resource for communication between the terminal device and the second network device.

9. A communication method, comprising:
receiving, from a second network device, information indicating a first resource, wherein the first resource is for communication between a terminal device and the second network device; and
sending first information to the terminal device, wherein the first information indicates the first resource, and
a first communication connection exists between the terminal device and the first network device.

10. The method according to claim 9, wherein the method further comprises:
sending second information to the terminal device, wherein the second information indicates the terminal device to receive, from the first network device, information indicating a resource for communication between the terminal device and the second network device.

11. The method according to claim 9 or 10, wherein the sending the first information to the terminal device comprises:
sending the first information to the terminal device on a second resource, wherein the second resource is for transmitting the information indicating the resource for communication between the terminal device and the second network device.

12. The method according to claim 11, wherein the method further comprises:
sending third information to the terminal device, wherein the third information indicates the second resource.

13. The method according to claim 11 or 12, wherein
the second resource is a downlink resource dedicated to transmitting the information indicating the resource for communication between the terminal device and the second network device; or,
the second resource is a downlink resource for transmitting information indicating a resource for communication between the terminal device and the first network device.

14. The method according to any one of claims 9 to 13, wherein that the first information indicates the first resource comprises:
the first information indicates the first resource and indicates that the first resource is for communication between the terminal device and the second network device.

15. The method according to any one of claims 9 to 14, wherein the first information further comprises information indicating a third resource, the third resource is used by the terminal device to send feedback information to the second network device, and the feedback information is for feeding back a reception status of data corresponding to the first resource.

16. The method according to any one of claims 9 to 15, wherein the method further comprises:
determining a first time instant, wherein the first time instant is a time instant at which the first network device sends the first information to the terminal device; and
the sending the first information to the terminal device comprises:
sending the first information to the terminal device based on the first time instant.

17. The method according to any one of claims 9 to 16, wherein the method further comprises:
sending fourth information to the terminal device, wherein the fourth information indicates the terminal device to stop receiving, from the first network device, the information indicating the resource for communication between the terminal device and the second network device.

18. The method according to any one of claims 9 to 17, wherein the method further comprises:
receiving first indication information from the terminal device or the second network device, wherein the first indication information indicates to send, to the terminal device via the first network device, the information indicating the resource for communication between the terminal device and the second network device.

19. The method according to any one of claims 9 to 18, wherein the method further comprises:
sending second indication information to the second network device, wherein the second indication information indicates that the first network device supports sending, to the terminal device, the information indicating the resource for communication between the terminal device and the second network device.

20. The method according to any one of claims 9 to 18, wherein the method further comprises:
sending third indication information to the terminal device or the second network device, wherein the third indication information indicates that sending, to the terminal device via the first network device, the information indicating the resource for communication between the terminal device and the second network device is allowed.

21. The method according to any one of claims 9 to 20, wherein the method further comprises:
receiving, from the second network device, information indicating a fourth resource, wherein
the fourth resource is for transmitting the information indicating the resource for communication between the terminal device and the second network device, and the fourth resource comprises the second resource.

22. The method according to claim 21, wherein the method further comprises:
sending, to the second network device, information indicating a fifth resource, wherein the fifth resource is for determining the fourth resource, and
the fifth resource is for transmitting the information indicating the resource for communication between the terminal device and the second network device.

23. The method according to any one of claims 9 to 22, wherein the method further comprises:
receiving the second information from the second network device, wherein the second information indicates the terminal device to receive, from the first network device, the information indicating the resource for communication between the terminal device and the second network device.

24. A communication apparatus, comprising a unit or a module configured to implement the method according to any one of claims 1 to 23.

25. A communication apparatus, wherein the communication apparatus comprises at least one processor, and the at least one processor is configured to perform the method according to any one of claims 1 to 23.

26. A computer-readable storage medium, wherein the computer-readable storage medium stores computer instructions, and when the computer instructions are executed, the computer is caused to perform the method according to any one of claims 1 to 23.

27. A communication system, wherein the communication system comprises a terminal device and a network device, wherein
the terminal device is configured to perform the method according to any one of claims 1 to 8; and
the first network device is configured to perform the method according to any one of claims 9 to 23.

28. A computer program product, wherein the computer program product comprises computer program code, and when the computer program code is run on a computer, the computer is caused to perform the method according to any one of claims 1 to 23.

29. A chip, wherein the chip comprises at least one processor and an interface, the processor is configured to read and execute instructions stored in a memory, and when the instructions are run, the chip is caused to perform the method according to any one of claims 1 to 23.
